# EUROPÄISCHE PATENTANMELDUNG

(11) **EP 4 484 077 A1**
(43) Veröffentlichungstag der Anmeldung: **01.01.2025**
(21) Anmeldenummer: 24181740.2
(22) Anmeldetag: 12.06.2024
(51) Int. Cl.: B25J 9/16, B25J 19/06

(54) **VERFAHREN ZUM BETRIEB EINES KOLLABORATIVEN ROBOTERS UND KOLLABORATIVER ROBOTER ZUR DURCHFÜHRUNG DIESES VERFAHRENS**

(30) Priorität: 26.06.2023 DE 102023116771
(71) Anmelder: Neura Robotics GmbH, 72555 Metzingen (DE)
(72) Erfinder: Reger, David, 72555 Metzingen (DE)
(74) Vertreter: Westphal, Mussgnug & Partner Patentanwälte mbB

(57) **Zusammenfassung**

Bereitgestellt werden ein Verfahren zum Betrieb eines kollaborativen Roboters (1, 2), bei dem der kollaborative Roboter (1, 2) mit einer Kamera (14, 31) einen Raumbereich (16) überwacht und bei dem der kollaborative Roboter (1, 2) mit einem Projektor (13, 32), der in einer festen geometrischen Beziehung zur Kamera (14, 31) steht, Informationen in einen Projektionsbereich (15), der zumindest ein Teilbereich des von der Kamera (14, 31) überwachten Raumbereichs (16) ist, projiziert und ein kollaborativer Roboter (1, 2) zur Durchführung des Verfahrens, wobei der kollaborative Roboter (1, 2) eine Kamera (14, 31) zur Überwachung eines Raumbereichs (16) und einen Projektor (13, 32) aufweist, der ausgelegt und eingerichtet ist, um Informationen in einen Projektionsbereich (15), der zumindest ein Teilbereich des von der Kamera (14, 31) überwachten Raumbereichs (16) ist, zu projizieren, wobei die Kamera (14,31) und der Projektor (13, 32) in einer festen geometrischen Beziehung zueinander in oder an einem gemeinsamen Bauteil angeordnet sind.

## Beschreibung

Die Erfindung betrifft kollaborative Roboter und ihren Betrieb.

Die Verwendung von Robotern hat in vielen Bereichen der Fertigung zu beträchtlichen Produktivitätssteigerungen geführt. Neben Prozessen, die vollautomatisiert durch Roboter ausgeführt werden können, gibt es aber nach wie vor eine Vielzahl von Aufgaben, bei denen Menschen und Roboter zusammenarbeiten müssen und direkt physisch miteinander interagieren. Um eine solche Interaktion zu ermöglichen, aber zugleich das Risiko einer Verletzung des Menschen zu minimieren, werden kollaborative Roboter verwendet, die üblicherweise mit Sensorik versehen sind, die den Roboter abschaltet oder zumindest seine Bewegung stoppt, wenn das Risiko einer Gefährdung des Menschen erkannt wird. Beispielsweise kann sich der kollaborative Roboter bei einem unerwarteten Kontakt oder dann, wenn in einem überwachten Raum ein Mensch detektiert wird, automatisch abschalten.

Naturgemäß ist man bestrebt, die Effizienz der Zusammenarbeit zwischen Mensch und Maschine zu erhöhen und insbesondere die Notwendigkeit einer solchen Abschaltung nach Möglichkeit zu vermeiden. Dazu trägt entscheidend bei, dass eine Interaktion zwischen Mensch und Maschine, idealerweise aber auch zwischen Maschine und Mensch ermöglicht wird, um so den Menschen in die Lage zu versetzen, präemptiv auf bevorstehende Aktionen des kollaborativen Roboters zu reagieren oder eigene Aktionen einzuleiten. Die Interaktion zwischen Maschine und Mensch erfolgt bislang allerdings nur rudimentär und wenig konkret, beispielsweise durch akustische Signale, die jedoch in lauten Arbeitsumgebungen oder bei Gehörschutzpflicht oft untergehen und für gehörlose Menschen und Menschen mit beeinträchtigtem Hörsinn nicht wahrnehmbar sind und diese dadurch ggf. Arbeiten mit bekannten kollaborativen Roboter nicht erledigen können. Bekannt ist auch die Verwendung von Warnlampen, die jedoch erfordern, dass man seine Aufmerksamkeit zumindest zeitweise vom eigentlichen Arbeitsprozess weg auf den Roboter richtet und zudem nur relativ abstrakte Hinweise auf das, was der Roboter gerade tut, liefern können.

Die Aufgabe der Erfindung besteht daher darin, ein Verfahren zum Betrieb eines kollaborativen Roboters anzugeben, das die Interaktion zwischen Mensch und Maschine, insbesondere im Hinblick auf von der Maschine ausgehende Interaktion mit dem Menschen, verbessert, sowie einen kollaborativen Roboter zur Durchführung dieses Verfahrens bereitzustellen.

Diese Aufgabe wird gelöst durch ein Verfahren mit den Merkmalen des Patentanspruchs 1 und durch einen kollaborativen Roboter mit den Merkmalen des Patentanspruchs 10. Vorteilhafte Weiterbildungen der Erfindung sind Gegenstand der jeweiligen abhängigen Patentansprüche.

Bei dem erfindungsgemäßen Verfahren zum Betrieb eines kollaborativen Roboters überwacht der kollaborative Roboter mit einer Kamera einen Raumbereich und projiziert mit einem Projektor, der in einer festen geometrischen Beziehung zur Kamera steht, Informationen in einen Projektionsbereich, der zumindest ein Teilbereich des von der Kamera überwachten Raumbereichs ist. Besonders vorteilhaft kann es dabei sein, einen möglichst geringen Abstand zwischen Projektor und Kamera zu wählen und diese in derselben Richtung auszurichten.

Durch die feste geometrische Beziehung zwischen Kamera und Projektor und durch den mit dem Überwachungsbereich der Kamera überlappenden Projektionsbereich, in den der Projektor seine Informationen projiziert, wird es ermöglicht, zu jedem Zeitpunkt kontextbezogene Informationen mittels des Projektors in den relevanten Arbeitsbereich, der ja zumindest ein Teil des beim Betrieb des kollaborativen Roboters üblicherweise mit der Kamera überwachten Bereichs ist, zu projizieren, so dass ein visueller Kommunikationskanal von dem Roboter zum Menschen eröffnet wird. Dieser ist bei Arbeitsabläufen insbesondere deshalb hocheffektiv nutzbar, weil die Projektion ebenfalls in den relevanten Arbeitsbereich fällt, also in den Bereich, auf den deshalb der menschliche Kollege des Roboters seine Aufmerksamkeit fokussieren kann, ohne sich zwischendurch durch Betrachtung des Roboters vergewissern zu müssen, ob dieser irgendwelche Warnsignale abgibt.

Besonders vorteilhaft kann die Aufmerksamkeit des menschlichen Kollegen auf die jeweils für den Arbeitsprozess relevante Stelle fokussiert werden, wenn die Kamera und der Projektor beim Betrieb des kollaborativen Roboters mit einem am Roboter beweglich angeordneten Bauteil, an dem sie fest angeordnet sind, um die feste geometrische Beziehung zwischen Projektor und Kamera zu definieren, gemeinsam bewegt werden. Dies kann insbesondere der Kopf des Roboters, der vorzugsweise auch mindestens eine Werkzeugaufnahme aufweist, sein, aber auch ein Roboterarm, der ebenfalls mit einer Werkzeugaufnahme, einem Greifer oder einem anderen Werkzeug ausgestattet ist. Insbesondere bei hochkomplexen Arbeitsabläufen oder wenn unterschiedliche Arbeitsschritte an einem Gegenstand aus unterschiedlichen Richtungen durchgeführt werden müssen ist es aber auch denkbar, Kamera und Projektor gemeinsam an einem Arm anzuordnen, der bewegt werden kann, um den relevanten Arbeitsbereich aus unterschiedlichen Perspektiven darstellen und Informationen in unterschiedlichen Richtungen projizieren zu können.

Besonders bevorzugt ist es, wenn bei dem Verfahren durch eine Steuerung des kollaborativen Roboters Betriebsparameter oder Bilddaten für den Projektor auf der Basis von Daten des Kamerabilds angepasst werden und/oder Betriebsdaten oder Bilddaten der Kamera auf der Basis von vom Projektor projizierten Informationen angepasst werden. Durch die feste räumliche Beziehung zwischen Kamera und Projektor wird dies erheblich erleichtert.

Beispielsweise kann der so betriebene kollaborative Roboter programmiert sein, um durch Auswertung der Kamerabilder eine Geste "Achselzucken" des menschlichen Kollegen zu identifizieren und als Reaktion darauf mit dem Projektor die Anweisung, was der menschliche Kollege als nächstes tun muss, zu projizieren.

Eine Ausführungsform des Verfahrens sieht vor, dass durch die Steuerung des kollaborativen Roboters die Betriebsparameter des Projektors derart geändert werden, dass die Schärfe und/oder der Ort, auf den der Projektor die Informationen projiziert, auch bei einer erfolgten und/oder während einer erfolgenden Bewegung des kollaborativen Roboters und/oder eines beweglichen Teils des kollaborativen Roboters, an dem die Kamera und der Projektor angeordnet sind, erhalten bleiben. Fällt also beispielsweise als Konsequenz einer solchen Bewegung eine projizierte Textinformation auf eine schräge Oberfläche, so dass Buchstaben sich verzerren und/oder unscharf werden, kann die Steuerung des kollaborativen Roboters durch Analyse der Kamerabilder dieses Problem erkennen und durch entsprechende Verstellung der Projektionsoptik des Projektors beheben.

Gemäß einer weiteren vorteilhaften Ausführungsform des Verfahrens ist vorgesehen, dass durch die Steuerung des kollaborativen Roboters eine Kalibration oder Verfeinerung der Bildauswertung der Bilder der Kamera auf Basis einer Auswertung von Bildern und/oder strukturierten Lichtstrahlen, die vom Projektor in den von der Kamera überwachten Raumbereich projiziert werden, erfolgt. Beispielsweise kann auf diese Weise konkret eine Kalibration der Kamera erfolgen, wenn vom Projektor entsprechende Bilder oder strukturiertes Licht projiziert werden. Das Verfahren kann darüber hinaus dazu benutzt werden, um mit einer 2D-Kamera aufgenommene Bilder mit einer 3D-Information zu versehen.

In einer ersten vorteilhaften Variante des Verfahrens umfassen die Informationen, die der Projektor projiziert, Informationen über eine bevorstehende Aktion des kollaborativen Roboters umfassen, beispielsweise welches Objekt der kollaborative Roboter als nächstes ergreift oder in welchen Bereich des Arbeitsraums sich der kollaborative Roboter als nächstes bewegt. Dadurch erhält der menschliche Kollege des kollaborativen Roboters frühzeitig den Hinweis darauf, wohin er sich bewegen sollte oder nicht bewegen sollte, um einen Kontakt mit dem kollaborativen Roboter zu vermeiden. Der menschliche Kollege erhält so also Hinweise auf die Intention des kollaborativen Roboters.

In einer zweiten vorteilhaften Variante des Verfahrens umfassen die Informationen, die der Projektor projiziert, Informationen über eine von einem mit dem kollaborativen Roboter zusammenarbeitenden menschlichen Kollegen als nächstes vorzunehmende Aktion. Dies reduziert die Anforderungen an den menschlichen Kollegen und macht ihn flexibler, je nach Bedarf als Zuarbeiter für unterschiedliche Aufgaben ausführende kollaborative Roboter, einsetzbar.

In einer dritten vorteilhaften Variante des Verfahrens umfassen die Informationen, die der Projektor projiziert, sicherheitsrelevante Informationen. Beispielsweise kann ein Bereich, in den der menschliche Kollege des kollaborativen Roboters gerade nicht hineinlaufen darf, kontinuierlich oder gezielt dann, wenn der kollaborative Roboter durch Auswertung der Kameradaten eine Annäherung des menschlichen Kollegen an einen gefährlichen Bereich feststellt, ein visuelles Warnsignal in genau diesen Bereich projizieren. Letzteres ist ein Beispiel für ein Verfahren, bei dem die Informationen, die der Projektor projiziert, vom Ergebnis einer Auswertung des Kamerabildes abhängen.

Ein kollaborativer Roboter zur Durchführung des erfindungsgemäßen Verfahrens weist eine Kamera zur Überwachung eines Raumbereichs und einen Projektor, der ausgelegt und eingerichtet ist, um Informationen in einen Projektionsbereich, der zumindest ein Teilbereich des von der Kamera überwachten Raumbereichs ist, zu projizieren, auf. Dabei stehen die Kamera und das Projektor in einer festen geometrischen Beziehung zueinander und sind in oder an einem gemeinsamen Bauteil angeordnet.

Das gemeinsame Bauteil kann ein Arm oder Kopf des kollaborativen Roboters sein. In einer vorteilhaften Variante ist vorgesehen, dass das gemeinsame Bauteil ein an dem kollaborativen Roboter lösbar befestigtes Modul ist. Die Befestigung kann beispielsweise mittels Schrauben, Magnete, Rastverbindungen oder ähnlichem erfolgen.

Bevorzugt ist ferner eine Steuerung des kollaborativen Roboters vorhanden ist, die ausgelegt und eingerichtet ist, um Betriebsparameter oder Bilddaten für den Projektor auf der Basis von Daten des Kamerabilds anzupassen und/oder Betriebsdaten oder Bilddaten der Kamera auf der Basis von vom Projektor projizierten Informationen anzupassen, um die oben im Detail beschriebenen Verfahren ausführen zu können.

Besonders bevorzugt ist die Kamera als 3D-Kamera ausgebildet, um Oberflächenstrukturen gut erkennen zu können und diese Informationen zum betrieb des Projektors berücksichtigen zu können.

Die Erfindung wird nachfolgend anhand von Figuren, die Ausführungsbeispiele darstellen, näher erläutert. Es zeigen
- Fig. 1: einen Kopf eines kollaborativen Roboters gemäß einer ersten Ausführungsform der Erfindung,
- Fig. 2a: einen Arm eines kollaborativen Roboters gemäß einer zweiten Ausführungsform der Erfindung, und
- Fig. 2b: ein Modul, mit dem der kollaborative Roboter nachgerüstet ist, um die Erfindung zu realisieren.

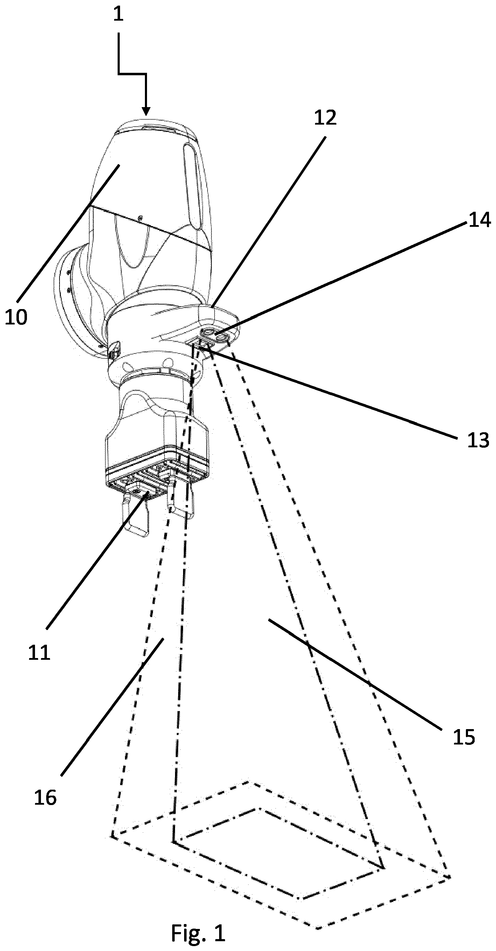

Figur 1 zeigt einen Kopf 10 eines kollaborativen Roboters 1, an dessen Unterseite eine nach unten gerichtete Werkzeughalterung 11 angeordnet ist. An der Unterseite eines Vorsprungs 12, der fest mit dem Kopf 10 verbunden ist, beispielsweise seitlich angeordnet ist, befinden sich ein Projektor 13 und eine Kamera 14, beispielsweise eine 3D-Kamera, die wegen ihrer Installation an dem Vorsprung 12 in einer festen geometrischen Beziehung und möglichst nahe beieinander angeordnet sind.

Ferner sind in Figur 1 der Projektionsbereich 15 des Projektors 13, also der Bereich, in den dieser Informationen projiziert, und der von der Kamera 14 überwachte Raumbereich 16 durch Darstellungen von Querschnitten der eigentlich jeweils kegelförmigen Bereich veranschaulicht, so dass offenkundig wird, dass der Projektor 13 seine Informationen in einen Teilbereich des von der Kamera 14 überwachten Raumbereichs 16 projiziert.

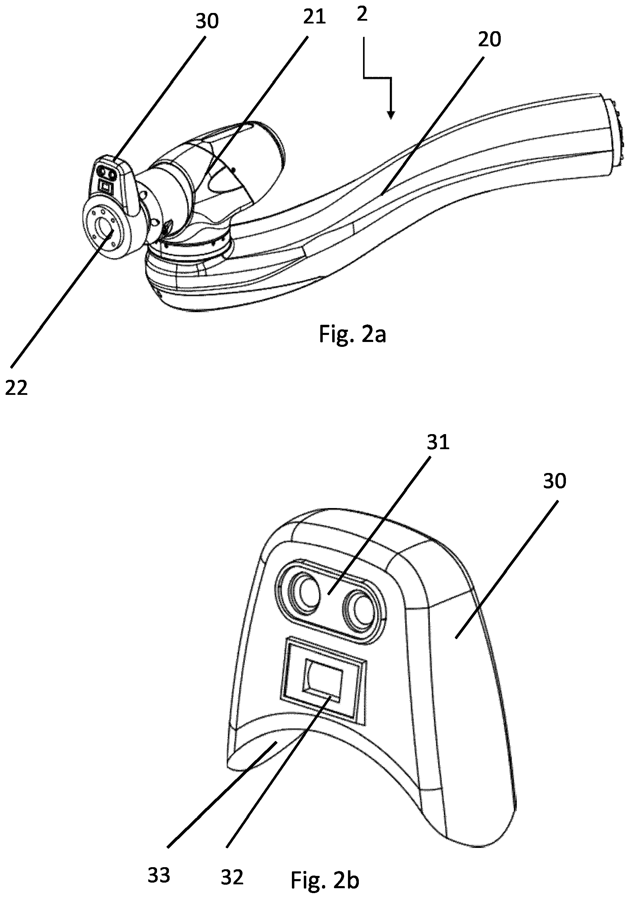

Figur 2a zeigt einen Arm 20 eines kollaborativen Roboters 2, an dem drehbar ein Kopf 21 mit einer Werkzeugaufnahme 22 angeordnet ist. Auf einem Schaft der Werkzeugaufnahme 22 ist ein Modul 30 lösbar angeordnet, das in Figur 2b dargestellt ist.

Wie der Figur 2b zu entnehmen ist, sind in dem Modul 30 eine insbesondere als 3D-Kamera ausgeführte Kamera 31 und ein Projektor 32 in einer festen geometrischen Beziehung zueinander so angeordnet, dass der Projektor 32 Informationen in einen Projektionsbereich, der zumindest ein Teilbereich des von der Kamera überwachten Raumbereichs ist, projiziert. Durch seine gewölbte Anlagefläche 33 kann das Modul an unterschiedlichen Stellen eines kollaborativen Roboters 1, 2 lösbar befestigt werden, so dass es zur Nachrüstung eines kollaborativen Roboters 1, 2 gut geeignet ist. Innerhalb des Moduls 30 kann die in der Figur 2b aus diesem Grund nicht sichtbare Steuerung des kollaborativen Roboters, mittels der Betriebsparameter oder Bilddaten für den Projektor auf der Basis von Daten des Kamerabilds angepasst werden und/oder Betriebsdaten oder Bilddaten der Kamera auf der Basis von vom Projektor projizierten Informationen angepasst werden, angeordnet sein; darüber hinaus kann das Modul 30 auch eine in seinem Inneren angeordnete separate Energieversorgung beispielsweise in Gestalt eines Akkus oder von Batterien aufweisen.

### Bezugszeichenliste

- 1, 2: kollaborativer Roboter
- 10: Kopf
- 11: Werkzeughalterung
- 12: Vorsprung
- 13, 32: Projektor
- 14, 31: Kamera
- 15: Projektionsbereich
- 16: Raumbereich
- 20: Arm
- 21: Kopf
- 22: Werkzeugaufnahme
- 30: Modul
- 33: Anlagefläche

## Patentansprüche

1. Verfahren zum Betrieb eines kollaborativen Roboters (1, 2), bei dem der kollaborative Roboter (1, 2) mit einer Kamera (14, 31) einen Raumbereich (16) überwacht und bei dem der kollaborative Roboter (1, 2) mit einem Projektor (13, 32), der in einer festen geometrischen Beziehung zur Kamera (14, 31) steht, Informationen in einen Projektionsbereich (15), der zumindest ein Teilbereich des von der Kamera (14, 31) überwachten Raumbereichs (16) ist, projiziert.

2. Verfahren nach Anspruch 1,
**dadurch gekennzeichnet, dass** die Kamera (14, 31) und der Projektor (13, 23) beim Betrieb des kollaborativen Roboters (1, 2) mit einem am kollaborativen Roboter (1, 2) beweglich angeordneten Bauteil, an dem die Kamera (14, 31) und der Projektor (13, 32) fest angeordnet sind, um die feste geometrische Beziehung zwischen Projektor (13, 32) und Kamera (14, 31) zu definieren, gemeinsam bewegt werden.

3. Verfahren nach Anspruch 1 oder 2,
**dadurch gekennzeichnet, dass** durch eine Steuerung des kollaborativen Roboters (1, 2) Betriebsparameter oder Bilddaten für den Projektor (13, 23) auf der Basis von Daten des Kamerabilds angepasst werden und/oder Betriebsdaten oder Bilddaten der Kamera (14, 31) auf der Basis von vom Projektor (13, 32) projizierten Informationen angepasst werden.

4. Verfahren nach Anspruch 2 oder 3,
**dadurch gekennzeichnet, dass** durch die Steuerung des kollaborativen Roboters (1, 2) die Betriebsparameter des Projektors (13, 32) derart geändert werden, dass die Schärfe und/oder der Ort, auf den der Projektor (13, 32) die Informationen projiziert, auch bei einer erfolgten Bewegung des Roboters (1, 2) und/oder eines beweglichen Teils des Roboters (1, 2), an dem die Kamera (14, 31) und der Projektor (13, 32) angeordnet sind, erhalten bleiben.

5. Verfahren nach Anspruch 3 oder 4,
**dadurch gekennzeichnet, dass** durch die Steuerung des kollaborativen Roboters (1, 2) eine Kalibration oder Verfeinerung der Bildauswertung der Bilder der Kamera (14, 31) auf Basis einer Auswertung von Bildern und/oder strukturierten Lichtstrahlen, die vom Projektor (13, 32) in den von der Kamera (14, 31) überwachten Raumbereich projiziert werden, erfolgt.

6. Verfahren nach einem der vorstehenden Ansprüche,
**dadurch gekennzeichnet, dass** die Informationen, die der Projektor (13, 32) projiziert, Informationen über eine bevorstehende Aktion des kollaborativen Roboters (1, 2) umfassen.

7. Verfahren nach einem der vorstehenden Ansprüche,
**dadurch gekennzeichnet, dass** die Informationen, die der Projektor (13, 32) projiziert, Informationen über eine von einem mit dem kollaborativen Roboter (1, 2) zusammenarbeitenden menschlichen Kollegen als nächstes vorzunehmende Aktion umfassen.

8. Verfahren nach einem der vorstehenden Ansprüche,
**dadurch gekennzeichnet, dass** die Informationen, die der Projektor (13, 32) projiziert, sicherheitsrelevante Informationen umfassen.

9. Verfahren nach einem der vorstehenden Ansprüche,
**dadurch gekennzeichnet, dass** die Informationen, die der Projektor (13, 32) projiziert, vom Ergebnis einer Auswertung des Kamerabildes abhängen.

10. Kollaborativer Roboter (1, 2) zur Durchführung eines Verfahrens nach einem der Ansprüche 1 bis 9, wobei der kollaborative Roboter (1, 2) eine Kamera (14, 31) zur Überwachung eines Raumbereichs (16) und einen Projektor (13, 32) aufweist, der ausgelegt und eingerichtet ist, um Informationen in einen Projektionsbereich (15), der zumindest ein Teilbereich des von der Kamera (14, 31) überwachten Raumbereichs (16) ist, zu projizieren, wobei die Kamera (14, 31) und der Projektor (13, 32) in einer festen geometrischen Beziehung zueinander in oder an einem gemeinsamen Bauteil angeordnet sind.

11. Kollaborativer Roboter (1,2) nach Anspruch 10,
**dadurch gekennzeichnet, dass** das gemeinsame Bauteil ein an dem kollaborativen Roboter (1, 2) lösbar befestigtes Modul (30) ist.

12. Kollaborativer Roboter (1,2) nach Anspruch 10 oder 11,
**dadurch gekennzeichnet, dass** eine Steuerung des kollaborativen Roboters (1, 2) vorhanden ist, die ausgelegt und eingerichtet ist, um Betriebsparameter oder Bilddaten für den Projektor (13, 32) auf der Basis von Daten des Kamerabilds anzupassen und/oder Betriebsdaten oder Bilddaten der Kamera (14, 31) auf der Basis von vom Projektor (13, 32) projizierten Informationen anzupassen.
